## Europäisches Patentamt
## European Patent Office
## Office européen des brevets

(11) Veröffentlichungsnummer : **0 120 313**
**B1**

(12)

# EUROPÄISCHE PATENTSCHRIFT

(45) Veröffentlichungstag der Patentschrift :
12.11.86

(51) Int. Cl.⁴ : **B 62 D 55/20**

(21) Anmeldenummer : **84101966.4**

(22) Anmeldetag : **24.02.84**

(54) **Verbindungselemente für Gleisketten nach dem Zwei-Gelenk-Bolzen-Prinzip.**

(30) Priorität : **01.03.83 DE 3307107**

(43) Veröffentlichungstag der Anmeldung :
**03.10.84 Patentblatt 84/40**

(45) Bekanntmachung des Hinweises auf die Patenterteilung : **12.11.86 Patentblatt 86/46**

(84) Benannte Vertragsstaaten :
**AT BE CH DE FR GB IT LI NL SE**

(56) Entgegenhaltungen :
**AT-B- 223 961
DE-A- 1 605 585
DE-A- 2 755 412
DE-B- 1 480 777**

(73) Patentinhaber : **DIEHL GMBH & CO.**
**Stephanstrasse 49**
**D-8500 Nürnberg (DE)**

(72) Erfinder : **Wiesner, Hagen-Heinz**
**Jörgensfeld 16**
**D-5650 Solingen 25 (DE)**
Erfinder : **Mattern, Heinz Erich**
**Im Loh 37**
**D-5630 Remscheid (DE)**

(74) Vertreter : **Hofmann, Gerhard, Dipl.-Ing. et al**
**Stephanstrasse 49**
**D-8500 Nürnberg (DE)**

## Beschreibung

Die Erfindung bezieht sich auf Verbindungselemente für Gleisketten nach dem Zwei-Gelenk-Bolzen-Prinzip nach dem Oberbegriff des Anspruches 1.

Aus der DE-C-14 80 777 ist eine Gleiskette für gepanzerte Fahrzeuge bekannt, bei der die Kettenkörper durch innenliegende Verbinder miteinander gekoppelt sind. Diese, auf dem Zwei-Gelenk-Bolzen-Prinzip beruhende Kette weist in den Kettenkörpern durch Stifte festgelegte Bolzen auf. Die gelenkige Verbindung erfolgt allein durch die Verbinder, wobei zwischen Bolzen und den Verbindern trockengelagerte Buchsen aus einem geeigneten Werkstoff gelagert sind. Es handelt sich daher um eine Kette mit trockengelagerten Bolzen. Die Verbinder sind aus einem Stück hergestellt. Dies bedeutet für die Montage und Demontage der Kette, daß beim Zusammenfügen zweier Kettenglieder die Verbinder fluchtend mit den Bolzenbohrungen in den Kettenkörpern gehalten werden müssen, um den Bolzen einpressen zu können. Dies ist zeitaufwendig und relativ umständlich.

Aus der DE-A-27 55 412 ist eine Kette nach dem Ein-Gelenk-Bolzen-Prinzip bekannt, bei der die Bolzen gummigelagert sind und zur Verbindung zweier Kettenglieder verschraubbare Rohrschellen dienen, wobei die Rohrschellen aus einem Stück hergestellt sind.

Ein zweiteiliges Verbindungselement für Gleisketten nach dem Zweigelenkbolzenprinzip ist aus der DE-A-1 606 585 bekannt. Dieses Verbindungselement ist innerhalb der Kettenkörper angeordnet.

Die Verbindungselemente haben die Form von Klammern, wobei die Klammern die Bolzen form- und kraftschlüssig festlegen. Hierzu weisen die Bolzen im Bereich der Klammern einen vom Kreisquerschnitt abweichenden Querschnitt auf.

Der Erfindung liegt die Aufgabe zugrunde, einen einfach herstellbaren und kostengünstigen Verbinder zu schaffen, der eine günstige Form der Kraftübertragung von einem Kettenglied zum anderen erlaubt, die Beanspruchung der Bolzen während der Zugkraftübertragung wesentlich mindert und die Herstellung einer relativ leichten Kette ermöglicht.

Die Lösung dieser Aufgabe ist in den Merkmalen des kennzeichnenden Teiles des Anspruches 1 zu entnehmen.

Dadurch ist eine relativ einfache Montage bzw. Demontage möglich, da die Klammern in der Laufebene der Kette ineinandergesteckt und miteinander verschraubt werden.

Vorteilhafte Weiterbildungen der Erfindung sind in den Unteransprüchen angegeben. Mit dem erfindungsgemäßen Verbinder werden folgende Vorteile erreicht : Er gestattet, die Verbindung von einem Kettenglied zum anderen so auf der Bolzenlänge anzubringen, daß beiderseits der Verbinder der Bolzen noch im gummierten Bolzenlager einliegt und somit nicht in der ungünstigen Form wie bei den bisherigen Endverbinderketten belastet wird.

Die bessere Verteilung der zu übertragenden Zugkraft auf den Bolzen führt zwangsläufig zu kleineren Durchmessern. Überschwere Kettengliederausführungen werden daher vermieden.

Die Beanspruchung der Verbinder durch das « Verschränken » der Ketten ist — bedingt durch ihre Lage — geringer als bei den bisher bekannten Endverbindern, die bei solch einer Beanspruchung durch ihre Außenlage max. belastet wurden.

Die Rückseite (Laufradseite) der Verbinder stellt bei positiver Knickung, bei gerader Lage und auch bei negativer Knickung der Kettenglieder für die Laufrollen eine Art Brücke dar und vermindert den bisher immer wieder beanstandeten unruhigen Lauf durch die Spalte zwischen den einzelnen Rohrkörpern einer Verbinderkette. Selbst durch Lösen der Schraubverbindung der Verbinder besteht nicht die Gefahr des Öffnens der Kette, wie dieses bei den Endverbinderketten der Fall ist.

Beim Durchfahren von Drahthindernissen ist ein Aufhängen und Mitnahme des Drahtes praktisch ausgeschlossen. Dies ist ein gravierender Nachteil von Endverbinderketten bisheriger Bauart.

Durch die Verwendung von hohlen Bolzen wird eine wesentliche Gewichtseinsparung erreicht. Hierbei ist in einfacher Weise die Herstellung der Verbinderanlageflächen auf den Bolzen durch spanloses Verformen, wie Kaltverformen, möglich.

Im einzelnen werden mit den Weiterbildungen nach den Unteransprüchen folgende Vorteile erreicht.

Nach dem Anspruch 2 liegt eine einfache Schraubverbindung für den Verbinder vor.

Nach dem Anspruch 3 ist die Schraube relativ geringen Scherbeanspruchungen ausgesetzt und kann daher kleiner als bisher üblich dimensioniert werden.

Nach dem Anspruch 4 werden in einfacher Weise jeweils zwei Schenkel benachbarter Klammern in Bezug auf die Schraubverbindung koaxial zentriert.

Nach dem Anspruch 5 ist die Fertigung und die Lagerhaltung vereinfacht und bei der Montage der Verbinder ein Verwechseln der Klammern nicht möglich.

Nach dem Anspruch 6 ist die Laufradseite des Verbinders eben ausgebildet und dient zur zusätzlichen Abstützung der Laufräder beim Übergang von einem Kettenglied zum nächsten Kettenglied.

Nach dem Anspruch 7 wird ein einfacher und wirksamer Formschluß erreicht.

Nach dem Anspruch 8 wird durch die als Rohre ausgebildeten Bolzen eine erhebliche Gewichtseinsparung erreicht, sowie die Herstellung der mit dem Verbinder korrespondierenden Flächen in einfacher Weise durch Kaltverformung bewirkt.

Nach dem Anspruch 9 dienen Schenkel als Elemente für die Schraubverbindungs-Vorspannung und vergrößern — zwar in geringem Umfang — durch die Durchbiegung der Schenkel den Bolzen-Umschlingungswinkel.

Nach dem Anspruch 10 sind die Bolzen an vier Seiten in Flächen- bzw. Linienkontakt.

Die spezifische Flächenpressung der Bolzen ist daher bei großer Sicherheit gegen unerwünschtes Verdrehen im Verbinder relativ klein.

Nach dem Anspruch 11 ist ein ungehinderter Kräfteübergang zwischen den Bolzen sichergestellt.

Ausführungsbeispiele der Erfindung sind in der Zeichnung dargestellt.

Es zeigt :

Figur 1 einen Ausschnitt aus einer Gleiskette nach dem Zwei-Gelenk-Bolzen-Prinzip in einer fahrbahnseitigen Ansicht

Figur 2 einen Teilquerschnitt durch die Gleiskette nach Fig. 1

Figur 3 die Gleiskette nach Fig. 2 mit negativer Knickung

Figur 4 ein Verbinder mit Bolzen

Figur 5 ein weiterer Verbinder mit Bolzen

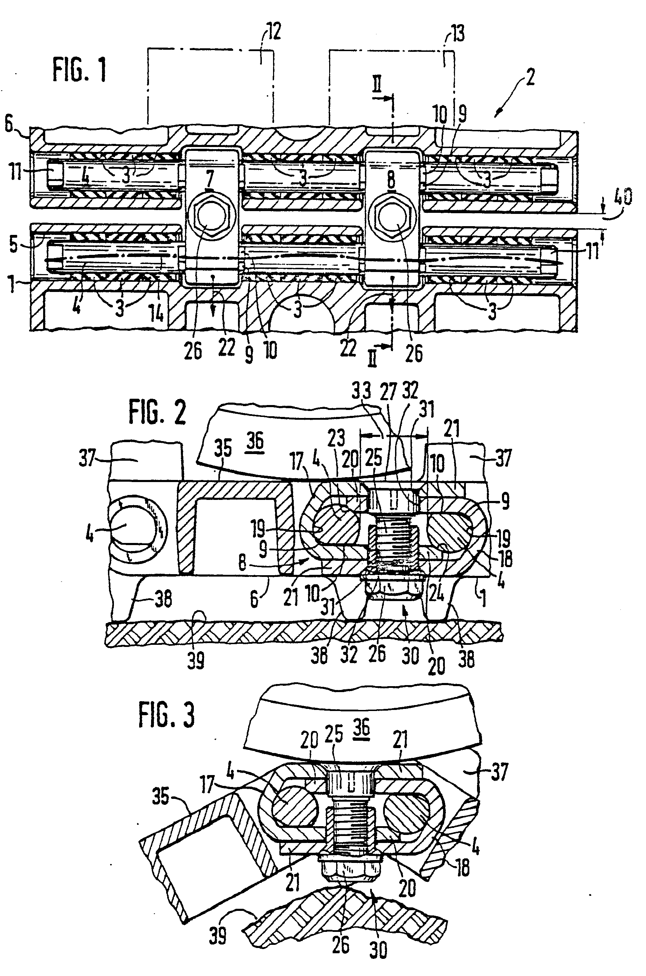

Nach Fig. 1 sind in Kettenkörpern 1, 6 einer Gleiskette 2 in Gummi 3 gelagerte Bolzen 4 in jeweils einer Bohrung 5 eingepreßt. Die Bolzen 4 sind im Bereich von Verbindern 7, 8 mit ebenen Flächen 9, 10 versehen. Zur Ausrichtung der Bolzen 4 in Bezug auf ihre Lage zu den Verbindern sind Flächen 11 zum Eingriff in ein geeignetes Werkzeug vorgesehen. Die Verbinder 7, 8 sind auf den Bolzen 4 montiert. Laufrollenbahnen 12, 13 sind strichpunktiert angedeutet.

Bei Zugbeanspruchung in der Kette 2 in Pfeilrichtung 22 entsteht die strichpunktiert gezeichnete Verformungslinie 14 des Bolzens 4. Hierbei stützt das Gummi 3 den entsprechend verformten Bolzen 4 in der Bohrung 5 ab.

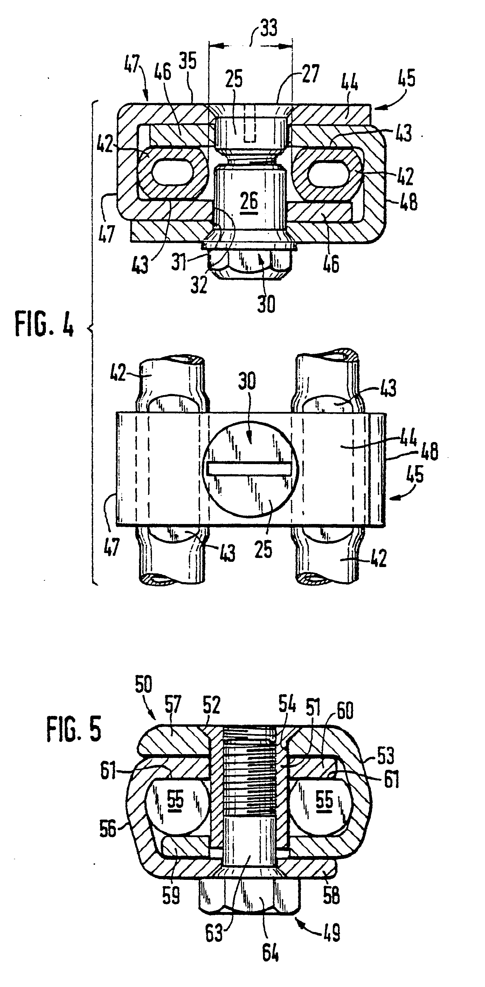

Nach Fig. 2 besteht der Verbinder 8 aus zwei gleich ausgebildeten Klammern 17, 18, die die Bolzen 4 mit Bogenabschnitten 19 und ebenen Schenkeln 20, 21 formschlüssig umschlingen. Mit Flächen 23, 24 sind sie an den Bolzen 4 abgestützt und liegen an den Flächen 9, 10 der Bolzen 4 an. Die Klammern 17, 18 weisen entsprechend einer aus Schraube 25 und Spannhülse 26 bestehende Schraubverbindung 30 Bohrungen 31 und 32 auf. Die Schenkel 20, 21 überbrücken einen freien Bereich 33 zwischen den Bolzen 4 bzw. Fig. 4, Bolzen 42.

Die Schraube 25 liegt in der Ebene 35 mit dem Schenkel 21 der Klammer 17, so daß eine Laufrolle 36 durch die Klammer 17 beim Überrollen von dem Kettenkörper 6 zum anderen Kettenkörper 1 abgestützt wird. Die Kettenkörper 1 und 6 weisen Führungszähne 37 und Greiferleisten 38 auf. Der Kopf der Spannhülse 26 liegt in Richtung zur Fahrbahn 39 im Abstützbereich der Greiferleisten 38.

Die Laufradseite der Verbinder 7, 8 stellt bei positiver Knickung, bei gerader Lage (Fig. 2) und auch bei negativer Knickung (Fig. 3) der Kettenglieder 1, 6 für die Laufrolle 36 eine Art Brücke dar und vermindert den unruhigen Lauf durch den bisher nicht überbrückten Spalt 40 zwischen den einzelnen Rohrkörpern 1 und 6 der Gleisketten 2.

Nach Fig. 4 sind die Bolzen als Rohre 42 ausgebildet. Im Bereich des Verbinders 45 weisen die Rohre 42 Flächen 43 auf und korrespondieren mit den inneren Schenkeln 46 der Klammern 47 und 48 des Verbinders 45. Die Schenkel 46 bedecken die Flächen 43 vollständig. Flächenbündig mit dem Schenkel 44 liegt der Kopf 27 der Schraube 25.

Nach Fig. 5 ist bei einem Verbinder 50 eine Spannhülse 51 mit einem konischen Kopf 52 einer Schraubverbindung 49 laufradseitig in einer Klammer 53 versenkt angeordnet. Die Klammer 53 ist mit einer entsprechenden Bohrung 54 versehen. Die Spannhülse 51 zentriert die Bolzen 55 und die Klammern 53 und 56. Der den Kopf 52 aufnehmende Schenkel 57 ist dicker ausgeführt als die übrigen Schenkel 58 bis 60 der Klammern 53 und 56. Der Schenkel 60 liegt an den Flächen 61 der Bolzen 55 an, während der Schenkel 59 mit den Bolzen 55 lediglich eine Linienberührung aufweist. Die Bolzen 55 liegen an der Spannhülse 51 und an den Klammern 53 und 56 an. Eine Schraube 63 mit Kopf 64 verbindet die Klammern 53 und 56 mit den Bolzen 55 unter Vorspannung, wobei im übrigen Formschluß besteht.

Die Montage der Verbinder 7 und 8 bzw. 45 bzw. 50 erfolgt an der Gleiskette dadurch, daß — am Beispiel des Verbinders 8 erläutert — die Klammern 17 und 18 an den jeweiligen Bolzen 4 der Kettenglieder 1, 6 in der Kettenebene vorjustiert werden. Dann werden die genannten Klammern ineinander geschoben und durch die Schraubverbindung 30 fixiert und befestigt.

**Patentansprüche**

1. Verbindungselemente für Gleisketten nach dem Zwei-Gelenk-Bolzen-Prinzip, bei dem Verbinder (7, 8 ; 45, 50) innerhalb der Kettenkörper angeordnet sind, die aus zwei, durch eine Schraubverbindung (30 ; 49) an den Bolzen (4 ; 42 ; 55) benachbarter Kettenkörper (1, 6) befestigbaren Klammern (17, 18 ; 47, 48 ; 53, 56) bestehen, und bei dem die Bolzen, wenigstens im Bereich der Verbinder, einen vom Kreisquerschnitt abweichenden Querschnitt aufweisen, dadurch gekennzeichnet, daß die Klammern (17, 18 ; 47, 48 ; 53, 56) mit Schenkeln (20, 21 ; 44, 46 ; 57 bis 60) versehen und versetzt ineinander steckbar sind und daß jede Klammer jeweils einen Bolzen (4 ; 42 ; 55) umschlingt und formschlüssig festliegt.

2. Verbindungselemente nach Anspruch 1, dadurch gekennzeichnet, daß die Klammern mit den Bolzen über eine aus Schraube (25 ; 63) und Spannhülse (26 ; 51) bestehende Schraubverbindung (30 ; 49) miteinander form- und kraftschlüssig verbunden sind und die Spannhülse wenigstens zwei Schenkel (20, 21) verschiedener Klammern (17, 18) zentriert.

3. Verbindungselemente nach Anspruch 2, dadurch gekennzeichnet, daß die Spannhülse (51) drei Schenkel (57 bis 60) verschiedener Klammern (53, 56) zentriert.

4. Verbindungselemente nach Anspruch 1, dadurch gekennzeichnet, daß die Klammern mit den Bolzen über eine aus Schraube (25) und eine Spannhülse (26) bestehende Schraubverbindung (30 ; 49) miteinander form- und kraftschlüssig verbunden sind, wobei die Spannhülse (26) und die Schraube (25) jeweils zwei Schenkel (20, 21 ; 44, 46) verschiedener Klammern (17, 18 ; 47, 48) zentriert.

5. Verbindungselemente nach Anspruch 1, dadurch gekennzeichnet, daß die ineinander steckbaren Klammern (17, 18 ; 47, 48) formgleich ausgebildet sind.

6. Verbindungselemente nach Anspruch 2, dadurch gekennzeichnet, daß die Spannhülse (26) oder die Schraube (25) laufradseitig flächenbündig (35) in einem Schenkel (20 ; 44 ; 57) der Klammer (17 ; 47 ; 53) sitzt.

7. Verbindungselemente nach Anspruch 1, dadurch gekennzeichnet, daß die Bolzen (4 ; 42 ; 55) mit ebenen Flächen (9, 10 ; 43 ; 61) versehen sind, auf denen ein Schenkel (46 ; 60) derselben Klammer (53, 56) anliegt oder Schenkel (20, 21) verschiedener Klammern (17, 18) anliegen.

8. Verbindungselemente nach Anspruch 1, dadurch gekennzeichnet, daß Bolzen als Rohre (42) ausgebildet sind und nur im Bereich der Verbinder (45) die mit dem Verbinder korrespondierenden ebenen Flächen (43) aufweisen.

9. Verbindungselemente nach Anspruch 1, dadurch gekennzeichnet, daß die Schenkel der Klammern einen freien Bereich zwischen den Bolzen (4 ; 42) überbrücken.

10. Verbindungselemente nach Anspruch 1, dadurch gekennzeichnet, daß die Bolzen (55) an den Klammern (47, 48) und der Schraubverbindung (49) anliegen.

11. Verbindungselemente nach Anspruch 1, dadurch gekennzeichnet, daß der jeweils innenliegende Schenkel (20 ; 46 ; 59 ; 60) mit seinem Ende am gegenüberliegenden Bolzen (4 ; 42 ; 55) abgestützt ist.

**Claims**

1. Connecting components for caterpillar tracks in accordance with the double joint-pin principle, in which connectors (7, 8 ; 45, 50) are arranged inside the track bodies, which consist of two clips (17, 18 ; 47, 48 ; 53, 56) which can be fastened by a bolted connection (30 ; 49) to the pins (4 ; 42 ; 55) of neighbouring track bodies (1, 6), and in which the pins, at least in the region of the connectors, have a cross-section which deviates from the circular cross-section, characterised in that the clips (17, 18 ; 47, 48 ; 53, 56) are provided with limbs (20, 21 ; 44, 46 ; 57 to 60) and can be fitted offset into one another and in that each clip in each case embraces one pin (4 ; 42 ; 55) and secures it in a form-locking manner.

2. Connecting components according to Claim 1, characterised in that the clips are jointly connected in a form- and force-locking manner to the pins by way of a bolted connection (30 ; 49) consisting of bolt (25 ; 63) and clamping sleeve (26 ; 51) ; and the clamping sleeve centres at least two limbs (20, 21) of different clips (17, 18).

3. Connecting components according to Claim 2, characterised in that the clamping sleeve (51) centres three limbs (57 to 60) of different clips (53, 56).

4. Connecting components according to Claim 1, characterised in that the clips are jointly connected in a form- and force-locking manner to the pins by way of a bolted connection (30 ; 49) consisting of bolt (25) and a clamping sleeve (26), in which respect the clamping sleeve (26) and the bolt (25) in each case centres two limbs (2, 21 ; 44, 46) of different clips (17, 18 ; 47, 48).

5. Connecting components according to Claim 1, characterised in that the clips (17, 18 ; 47, 48) which can be fitted into one another are of the same shape in design.

6. Connecting components according to Claim 2, characterised in that the clamping sleeve (26) or the bolt (25) is seated at the running-wheel side in a surface-flush manner (35) in a limb (20 ; 44 ; 57) of the clip (17 ; 47 ; 53).

7. Connecting components according to Claim 1, characterised in that the pins (4 ; 52 ; 55) are provided with plane surfaces (9, 10 ; 43 ; 61) against which a limb (46 ; 60) of the same clip (53, 56) butts or limbs (20, 21) of different clips (17, 18) butt.

8. Connecting components according to Claim 1, characterised in that the pins are designed as tubes (42) and only in the region of the connectors (45) have the plane surface (43) corresponding with the connector.

9. Connecting components according to Claim 1, characterised in that the limbs of the clips bridge a free region between the pins (4 ; 42).

10. Connecting components according to Claim 1, characterised in that the pins (55) butt against the clips (47, 48) and the bolted connection (49).

11. Connecting components according to Claim 1, characterised in that the respectively inwardly-lying limb (2 ; 46 ; 59 ; 60) is supported with its end on the opposite pin (4 ; 42 ; 55).

**Revendications**

1. Eléments de liaison pour chenilles selon le principe des deux tourillons d'articulation, selon lequel des organes d'assemblage (7, 8 ; 45, 50) sont disposés à l'intérieur du maillon de chenille, organes qui comprennent deux brides d'assemblage (17, 18 ; 47, 48 ; 53, 56) pouvant être fixées aux tourillons (4 ; 42 ; 55) de maillons (1, 6) voisins par un assemblage par vis (30 ; 49), et selon lequel les tourillons présentent, au moins au voisinage des organes d'assemblage, une section droite dont la forme diffère de celle d'une section droite circulaire, caractérisés en ce que les brides (17, 18 ; 47, 48 ; 53, 56) comportent des branches (20, 21 ; 44, 46 ; 57 à 60) et peuvent s'emboîter les unes dans les autres avec décalage, et en ce que chaque bride enserre un tourillon respectif (4 ; 42 ; 55) et est fixée par concordance de forme.

2. Eléments de liaison selon la revendication 1, caractérisés en ce que les brides sont, avec les tourillons, reliées entre elles avec concordance de forme et précontrainte au moyen d'un assemblage par vis (30 ; 49) comprenant une vis (25 ; 63) et une douille de serrage (26, 61) et en ce que la douille de serrage centre au moins deux branches (20, 21) de brides (17, 18) différentes.

3. Eléments de liaison selon la revendication 2, caractérisés en ce que la douille de serrage (51) centre trois branches (57 à 60) de brides (53, 56) différentes.

4. Eléments de liaison selon la revendication 1, caractérisés en ce que les brides sont, avec les tourillons, reliées entre elles avec concordance de forme et précontrainte au moyen d'un assemblage par vis (30 ; 49) comprenant une vis (25) et une douille de serrage (26), la douille de serrage (26) et la vis (25) centrant chacune deux branches (20, 21 ; 44, 46) de brides différentes (17, 18 ; 47, 48).

5. Eléments de liaison selon la revendication 1, caractérisés en ce que les brides (17, 18 ; 47, 48) emboîtables les unes dans les autres, sont réalisées avec la même forme.

6. Eléments de liaison selon la revendication 2, caractérisés en ce que la douille de serrage (26) ou la vis (25) est, du côté de la roue de roulement, placée de façon à affleurer (plan 35) avec une branche (20 ; 44 ; 57) des brides (17, 47, 53).

7. Eléments de liaison selon la revendication 1, caractérisés en ce que les tourillons (4 ; 42 ; 55) comportent des surfaces planes (9, 10 ; 43, 61) sur lesquelles est placée une branche (46 ; 60) de la même bride (53, 56) ou des branches (20, 21) de brides (17, 18) différentes.

8. Eléments de liaison selon la revendication 1, caractérisés en ce que les tourillons sont réalisés sous la forme de tubes (42) et ne comportent qu'au voisinage des organes d'assemblage (45) les surfaces planes (43) correspondant à l'organe d'assemblage.

9. Eléments de liaison selon la revendication 1, caractérisés en ce que les branches des brides franchissent un intervalle libre entre les tourillons (4 ; 42).

10. Eléments de liaison selon la revendication 1, caractérisée en ce que les tourillons (55) sont en contact avec les brides (47, 48) et l'assemblage par vis (49).

11. Eléments de liaison selon la revendication 1, caractérisés en ce que la branche respectivement intérieure (20 ; 46 ; 59 ; 60) s'appuie par une extrémité sur le tourillon opposé (4 ; 42 ; 55).

FIG. 1

FIG. 2

FIG. 3

FIG. 4

FIG. 5